Europäisches Patentamt

European Patent Office

Office européen des brevets

(11) Veröffentlichungsnummer: **0 274 621**
B1

(12) # EUROPÄISCHE PATENTSCHRIFT

(45) Veröffentlichungstag der Patentschrift:
21.03.90

(51) Int. Cl.⁴: **B29C 45/14**, B29C 45/16

(21) Anmeldenummer: 87117157.5

(22) Anmeldetag: 20.11.87

(54) Vorrichtung zum Herstellen einer quasi endlosen Reihe von an einem Trägerband gehaltenen Formlingen.

(30) Priorität: 01.12.86 DE 3640984

(43) Veröffentlichungstag der Anmeldung:
20.07.88 Patentblatt 88/29

(45) Bekanntmachung des Hinweises auf die Patenterteilung:
21.03.90 Patentblatt 90/12

(84) Benannte Vertragsstaaten:
DE FR GB IT SE

(56) Entgegenhaltungen:
FR-A- 1 027 037
US-A- 2 465 656
US-A- 4 008 302

PATENT ABSTRACTS OF JAPAN, Band 9,
Nr. 142 (M-388)[1865], 18. Juni 1985; &
JP-A-60 21 222 (MISAWA HOOMU K.K.) 02-02-1985
MACHINE DESIGN, Band 52, Nr. 28, 11. Dezember 1980,
Seiten 189-190, Cleveland, Ohio, US; D.R. DREGER:
"Strip-molded plastics slash assembly costs"

(73) Patentinhaber: Paul Hellermann GmbH,
Siemensstrasse 5, D-2080 Pinneberg(DE)

(72) Erfinder: Heinke, Horst, Lütt Wittmoor 1A,
D-2000 Norderstedt 1(DE)

(74) Vertreter: Glawe, Delfs, Moll & Partner Patentanwälte,
Postfach 26 01 62 Liebherrstrasse 20,
D-8000 München 26(DE)

## Beschreibung

Die Erfindung betrifft eine Vorrichtung zum Herstellen einer quasi endlosen Reihe von an einem Trägerband mit vorbestimmtem Teilungabstand gehaltenen Formlingen gemäß dem Gattungsbegriff des Anspruchs 1.

Eine bekannte Vorrichtung dieser Art (US-PS 2 465 656) enthält lediglich einen Formabschnitt mit mehreren Formnestern, die einen Abstand voneinander aufweisen, der ein Mehrfaches des vorbestimmten Teilungsabstands beträgt, wobei sich dazwischen Blindnester befinden. Jeweils nach Formung einer ersten Gruppe von Formlingen wird das Trägerband mit den daran befindlichen Formlingen um eine Teilung vorgeschoben. Die vorhandenen Formlinge befinden sich dann in Blindnestern, während in den Formnestern neue, dazwischen befindliche Formlinge gebildet werden. Es folgt ggf. ein weiterer Vorschubschritt um den vorbestimmten Teilungsabstand, um eine weitere Gruppe dazwischen liegender Formlinge herzustellen. Danach muß ein Vorschubschritt erfolgen, der der gesamten Länge der gebildeten Formlingsgruppe entspricht. Die Notwendigkeit von Vorschubschritten unterschiedlicher Länge wird als nachteilig empfunden.

Der Erfindung liegt daher die Aufgabe zugrunde, eine Vorrichtung der eingangs genannten Art zu schaffen, die lediglich eine Vorschublänge benötigt.

Die erfindungsgemäße Lösung liegt in den kennzeichnenden Merkmalen des Anspruchs 1. Durch die Anordnung der in den beiden Formvorgängen zu verwendenden Formnester in mehreren aufeinanderfolgenden Formabschnitten kommt man mit einem, stets gleichen Vorschubschritt aus, der dem Teilungsabstand der Abschnitte entspricht.

Zwar ist es bei der Herstellung langgestreckter Gegenstände bekannt, die unterschiedlichen Teile dieser Gegenstände als gesonderte Formlinge herzustellen, wofür wegen der unterschiedlichen Gestalt dieser Teile zwei unterschiedliche Formabschnitte erforderlich sind (Patent Abstracts of Japan, Band 9, Nr. 142 (M-388) [1865], 18. Juni 1985; & JP-A-60 21 222). Jedoch lag die Übertragung dieser Maßnahme von der Herstellung langgestreckter Gegenstände auf die Herstellung einer quasi endlosen Reihe von Gegenständen nicht nahe.

Besonders vorteilhaft ist die Anwendung dieses Verfahrens in denjenigen Fällen, in denen das Trägerband durch einen die Gegenstände verbindenden Steg umhüllt wird, der im Hinblick auf die weitere Ver- oder Bearbeitung der Gegenstände genaue Abmessungen und bestimmte Maßabstände zu den Gegenständen haben soll. Oftmals ist das Trägerband auch zu flexibel für anschließende Führungsaufgaben. Schließlich soll durch die Umhüllung des Trägerbands durch den Verbindungssteg auch noch dafür gesorgt werden, daß die Gegenstände einen genauen Abstand voneinander einhalten.

Zweckmäßigerweise werden die nach der Herstellung der Gegenstände im ersten Formabschnitt noch fehlenden Gegenstände unverzüglich danach eingefügt. Jedoch ist es auch denkbar, zunächst eine quasi endlose Reihe zu bilden, in der lediglich die im ersten Formabschnitt hergestellten Gegenstände enthalten sind, während die noch fehlenden Gegenstände anschließend in einem besonderen Herstellungsgang erzeugt werden. Zweckmäßiger ist es aber, die Herstellung im zweiten Formabschnitt unmittelbar an diejenige im ersten Abschnitt anzuschließen, wobei vorzugsweise ein Spritzvorgang im ersten Formabschnitt gleichzeitig mit einem Spritzvorgang im zweiten Formabschnitt erfolgt. Die beiden Formabschnitte sind zu diesem Zweck vorzugsweise in derselben Form angeordnet; sie können aber auch in unterschiedlichen Formen untergebracht sein. Zweckmäßigerweise sind die beiden Formabschnitte nebeneinander vorgesehen. Möglich ist es aber auch, daß sie sich gegenseitig überlappen, indem beispielsweise im ersten Formabschnitt zwischen den Formnestern Blindnester vorgesehen sind und die geformten Gegenstände mit dem Trägerband nach einem ersten Herstellungsschritt um eine halbe Teilung versetzt werden, so daß die zuvor in den Formnestern hergestellten Gegenstände sich anschließend in den benachbarten Blindnestern befinden.

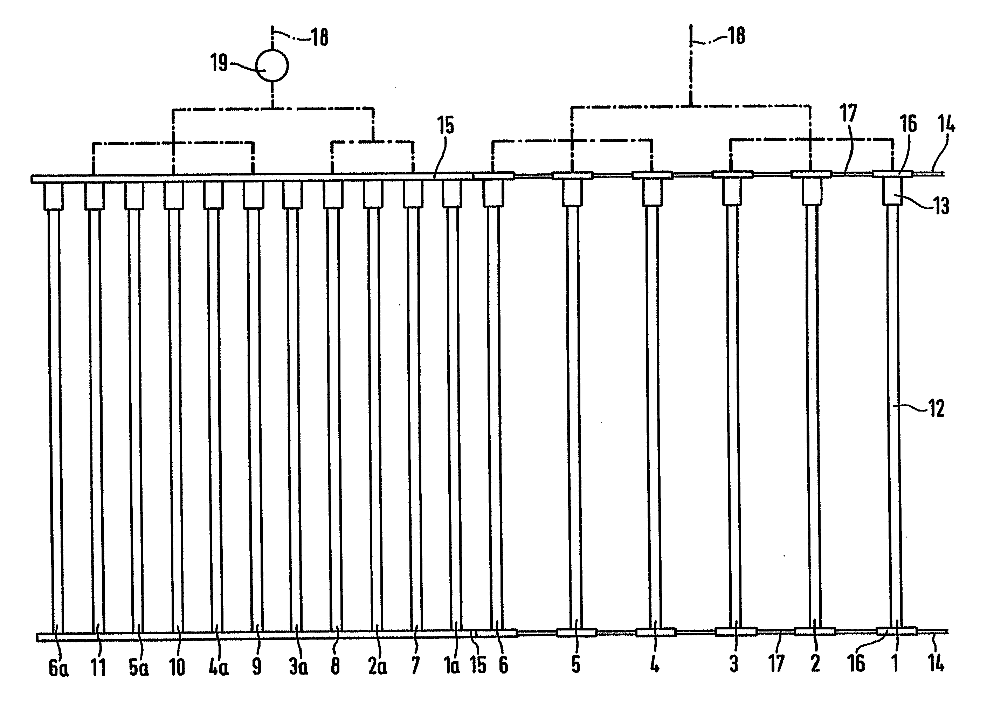

Die Erfindung wird im folgenden näher unter Bezugnahme auf die Zeichnung erläutert, die in einer Figur schematisch eine Form bzw. den damit herzustellenden Gegenstand darstellt.

Die durchgezogenen Linien geben sowohl die Umrisse der Formnester in der Form als auch der damit herzustellenden Gegenstände an. Es handelt sich dabei beispielsweise um Kabelbinder, die aus einem Band 12 und einem Kopf 13 bestehen und quasi endlos miteinander durch Stege 15 verbunden sein sollen, die genaue Abmessungen und genaue Abstände zueinander und zu den Gegenständen aufweisen sollen, so daß durch Angriff an ihnen eine Förderung durch weitere Bearbeitungsstationen der Kabelbinder möglich ist. Die Stege werden mittig in Längs richtung durchzogen von je einem Trägerband 14, das - von einer nicht gezeigten Abrolleinrichtung kommend - durch die Form geführt ist. Im Anschluß an die Form befindet sich eine nicht dargestellte Fördervorrichtung, durch die den geformten Gegenständen und den Trägerbändern die Vorschubbewegung aufgegeben wird.

Im ersten Formabschnitt befinden sich die Formnester 1 bis 6, die durch die strichpunktiert angedeuteten Kanäle 18 mit Formmasse beaufschlagt sind. Zu jedem Formnest gehört ein Abschnitt 16 einer für die Bildung eines Teils des Stegs 15 bestimmten Formvertiefung. Jeder Kabelbinder 1 bis 5 wird daher in dem ersten Formabschnitt mit einem Teilstück 16 des Stegs ausgerüstet. Dazwischen befinden sich ein freies Stück des Trägerbandes 14, das durch eine Führung 17 genau geführt und dicht eingeschlossen wird.

Nach dem Umsetzen in den zweiten Formabschnitt gelangen die Gegenstände 1 bis 6 in die Blindnester 1a bis 6a, die nicht an die strichpunktiert dargestellten Massekanäle angeschlossen sind. Dazwischen befinden sich die Formnester 7 bis 11 für die noch fehlenden Gegenstände, wobei die Formvertiefungen für die Stege 15 vollständig durchgehend ausgeführt sind. Darin finden zum einen die bereits geformten Teile 16 der Stege Platz. Zum anderen befinden sich darin Lücken, die bei der Herstellung der noch fehlenden Gegenstände durch entsprechende Stegabschnitte ausgefüllt werden.

Die Massezufuhr zum zweiten Formabschnitt ist mittels eines Absperrorgans 19 absperrbar.

Bei Beginn des Herstellungsvorgangs werden zunächst die Trägerbänder 14 durch die Form geführt. Bei geschlossenem Absperrorgan 19 wird zunächst Masse dem ersten Formabschnitt zugeführt, wodurch die Kabelbinder 1 bis 6 gebildet werden. Diese werden danach um den Abschnitt zwischen den Formnestern 1 und 1a nach links vorgerückt, so daß sie in die Blindnester 1a bis 6a gelangen. Das Absperrorgan 19 wird geöffnet. Beim nächsten Formvorgang werden sowohl im ersten Formabschnitt neue Kabelbinder 1 bis 6 gebildet als auch im zweiten Formabschnitt die noch fehlenden Kabelbinder 7 bis 11; und so fort.

Zweckmäßig kann die Verwendung eines glatten Trägerbandes sein, damit die Schrumpfung der dieses umgebenden Stegteile nicht behindert wird. Wenn keine Schrumpfung der Stegteile gegenüber dem Trägerband gewünscht wird, kann dieses rauh ausgeführt werden, beispielsweise in der Form einer gedrehten oder geflochtenen Schnur.

## Patentansprüche

1. Vorrichtung zum Herstellen einer quasi endlosen Reihe von an einem Trägerband mit vorbestimmten Teilungsabstand gehaltenen und dieses umschließenden Formlingen mit einer Spritzgußform, die eine Mehrzahl von Formnestern (1 bis 11) enthält, die einen Teilungsabstand voneinander aufweisen, der einem ganzzahligen Vielfachen des vorbestimmten Teilungsabstand der Formlinge gleicht und denen jeweils eine dichte Führung (17) für das Trägerband (14) benachbart ist, sowie mit Blindnestern (1a-6a) zwischen den Formnestern (6-11) und einer Vorschubeinrichtung zum Vorschieben des Trägerbands (14) und der darin befindlichen Formlinge zwischen zwei aufeinanderfolgenden Formvorgängen in solchen auf den Teilungsabstand abgestimmten Schritten, daß in einem ersten Formvorgang nur eine Gruppe von Formlingen mit einem Teilungsabstand geformt wird, der ein Mehrfaches des vorbestimmten Teilungsabstands beträgt, und in wenigstens einem weiteren Formvorgang die dazwischen liegenden Formlinge gebildet werden, dadurch gekennzeichnet, daß die Form in einem ersten Formabschnitt nur Formnester (1-6) mit einem gemäß dem ersten Formvorgang entsprechenden, mehrfachen Teilungsabstand enthält und in wenigstens einem zweiten Formabschnitt Blindnester (1a-6a) für die im ersten Formabschnitt gebildeten Formlinge sowie Formnester für die dazwischen zu bildenden Formlinge aufweist.

2. Vorrichtung nach Anspruch 1, dadurch gekennzeichnet, daß zwei Formabschnitte vorgesehen sind, von denen der erste zum Formen jedes zweiten Formlings ausgebildet ist.

3. Vorrichtung nach Anspruch 1 oder 2, dadurch gekennzeichnet, daß ein glattes Kunststoffband (14) als Trägerband verwendet wird.

## Revendications

1. Dispositif pour la fabrication d'une série quasi continue de pièces moulées maintenues à intervalles prédéterminés sur une bande de support et entourant celle-ci, comprenant un moule à injection qui contient une multiplicité de cavités de moulage (1 à 11) qui sont séparées les unes des autres par un intervalle égal à un multiple entier de l'intervalle prédéterminé entre les pièces moulées et à chacune desquelles est contigu un guide étanche (17) pour la bande de support (14), ainsi que des cavités aveugles (1a–6a) entre les cavités de moulage (6–11) et un dispositif d'avancement pour faire avancer la bande de support (14) et les pièces moulées se trouvant sur elle, entre deux opérations de moulage successives, de pas adaptés de telle manière à l'intervalle que, dans un première opération de moulage, il ne soit moulé qu'un groupe de pièces moulées séparées par un intervalle qui s'élève à un multiple de l'intervalle prédéterminé et que, dans au moins une autre opération de moulage, les pièces moulées intermédiaires soient formées, caractérisé en ce que dans une première partie du moule, le moule ne contient que des cavités de moulage (1–6) séparées par un intervalle multiple correspondant à la première opération de moulage et en ce que, dans au moins une deuxième partie du moule, il présente des cavités aveugles (1a–6a) pour les pièces moulées formées dans la première opération de moulage, ainsi que des cavités de moulage pour les pièces moulées qui doivent être formées entre celles-ci.

2. Dispositif selon la revendication 1, caractérisé en ce qu'il est prévu deux parties de moule, parmi lesquelles la première est réalisée en vue du moulage d'une pièce moulée sur deux.

3. Dispositif selon la revendication 1 ou 2, caractérisé en ce qu'une bande lisse de matière plastique (14) est utilisée comme bande de support.

## Claims

1. An apparatus for producing a quasi endless series of mouldings maintained at a predetermined pitch spacing on a carrier member and surrounding this latter with an injection mould, which comprises a plurality of mould cavities (1 to 11) which are at a pitch spacing from one another which is equal to a whole-number multiple of the predetermined pitch spacing of the mouldings and each of which is adjacent to a sealing guide (17) for the carrier member (14), and also with blank cavities (1a–6a) between the mould cavities (6–11) and a feed device for feeding the carrier member (14) and the mouldings situated therein between two successive moulding operations in steps co-ordinated with the pitch spacing such that in a first moulding operation only one group of mouldings is moulded at a pitch spacing which is a multiple of the predetermined pitch spacing, and in at least one further moulding operation the mouldings situated therebetween are formed, characterised in that in a first mould section the mould contains only mould cavities (1 to 6) with a corresponding multiple pitch spacing according to the first moulding operation and in at least one second mould section it has blank cavities (1a–6a) for the mouldings formed in the first mould section and also mould cavities for the mouldings to be formed therebetween.

2. An apparatus according to Claim 1, characterised in that two mould sections are provided, the first one of which is designed to mould every other moulding.

3. An apparatus according to Claim 1 or 2, characterised in that a smooth plastics belt (14) is used as the carrier member.